# EUROPEAN PATENT APPLICATION

(11) **EP 2 275 788 A2**
(43) Date of publication of application: **19.01.2011**
(21) Application number: 10002765.5
(22) Date of filing: 16.03.2010
(51) Int. Cl.: G01G 3/12, G01G 9/00, G01G 17/02, G01G 19/00

(54) **Weight detection apparatus**

(30) Priority: 14.07.2009 JP 2009165931
(71) Applicant: Kabushiki Kaisha Toshiba, Minato-ku, Tokyo 105-8001 (JP)
(72) Inventor: Nomura, Hiroshi, Tokyo 105-8001 (JP)
(74) Representative: Kramer - Barske - Schmidtchen

(57) **Abstract**

A weight detection apparatus includes a transfer mechanism configured to transfer a medium (P) to be detected along a transfer path at a predetermined speed, a transducer (42) configured to detect a kinetic energy of the medium (P) transferred by the transfer mechanism, and convert the detected kinetic energy into a measurable physical quantity, and an operation section configured to calculate an weight of the medium (P) on the basis of the physical quantity converted by the transducer (42) and the predetermined speed.

## Description

### WEIGHT DETECTION APPARATUS

An embodiment of the present invention relates to a weight detection apparatus configured to detect the weight of a moving medium to be detected.

Regarding the weight of an article, it is the general way to detect and measure the weight in a state of rest. However, in recent years, an apparatus configured to measure the weight of a moving object is proposed. For example, in a multiple scale apparatus disclosed in Jpn. Pat. Appln. KOKAI Publication No. 10-122940, one or a plurality of conveyor scales each provided with a weight measurement section such as a load cell or the like, and transfer rollers are arranged on a transfer path in a line, and when a package is transferred through the conveyor scales, the weight of the package is measured by subjecting output signals from the scales to operation.

However, in the system in which scales are installed on the transfer line, it is necessary to smoothly transfer the object to be transferred on the scales without vibration, and the transfer distance becomes long in accordance with the time required to measure the weight of one package in some cases.

In order to increase the processing capability of the object to be transferred, it is conceivable to increase the transfer speed of the package or shorten the transfer pitch of the package. However, originally, although it is necessary to apply the weight of the package to the load cell in the direction of the gravitational force, when the transfer speed is increased, the application of the weight of the package in the gravitational direction becomes unstable, and it becomes difficult to measure the weight correctly. Further, in order to secure the processing time necessary for the weight measurement, the conveyor scale must be made long, thereby elongating the length of the overall apparatus. In the case where the weight of a light medium to be detected such as a paper sheet is measured, when the transfer speed is increased to enhance the processing capability, it becomes difficult to measure the weight by the scale.

When the transfer pitch is shortened, the conveyor scale should be made short conversely, and there arises a problem that the length of the scale is insufficient for the measurement.

The present invention has been contrived in consideration of these circumstances, and its object is to provide a weight detection apparatus capable of stably detecting the weight of a moving medium to be detected.

According to an aspect of the invention, there is provided a weight detection apparatus characterized by comprising: a transfer mechanism configured to transfer a medium to be detected along a transfer path at a predetermined speed; a transducer configured to detect a kinetic energy of the medium transferred by the transfer mechanism, and convert the detected kinetic energy into a measurable physical quantity; and an operation section configured to calculate an weight of the medium on the basis of the physical quantity converted by the transducer and the predetermined speed.

According to the configuration described above, it is possible to obtain a weight detection apparatus capable of stably detecting the weight of a medium to be detected being transferred, and stably detecting the weight of a light medium to be detected.

The invention can be more fully understood from the following detailed description when taken in conjunction with the accompanying drawings, in which:
FIG. 1 is a block diagram schematically showing the overall weight detection apparatus according to a first embodiment of the present invention;
FIG. 2 is a plan view showing the weight detection apparatus;
FIG. 3 is a perspective view showing a transducer of the weight detection apparatus;
FIG. 4A is a perspective view showing the transducer in the deformed state;
FIG. 4B is a perspective view showing the transducer in the natural state;
FIG. 5A is a plan view showing the transducer in the deformed state;
FIG. 5B is a plan view showing the transducer in the natural state;
FIG. 6 is a graph showing a relationship between the kinetic energy of a moving member and mass thereof;
FIG. 7 is a view showing a correlation between the weight of a medium to be detected and output of a transducer of a case where the energy is converted into a voltage by a strain gage;
FIG. 8 is a plan view of the weight detection apparatus showing the transfer state of a paper sheet transferred by a first transfer section;
FIG. 9 is a plan view of the weight detection apparatus showing the state where the weight of a paper sheet is detected by a transducer;
FIG. 10 is a plan view of the weight detection apparatus showing an inversion operation of a medium to be detected carried out by a direction inversion section;
FIG. 11 is a perspective view showing a transducer according to a second embodiment of the present invention;
FIG. 12 is a perspective view showing a transducer according to a third embodiment of the present invention;
FIG. 13 is a perspective view showing a transducer according to a fourth embodiment of the present invention; and
FIG. 14 is a perspective view showing a transducer according to a fifth embodiment of the present invention.

Embodiments of the present invention will be described in detail with reference to the accompanying drawings.

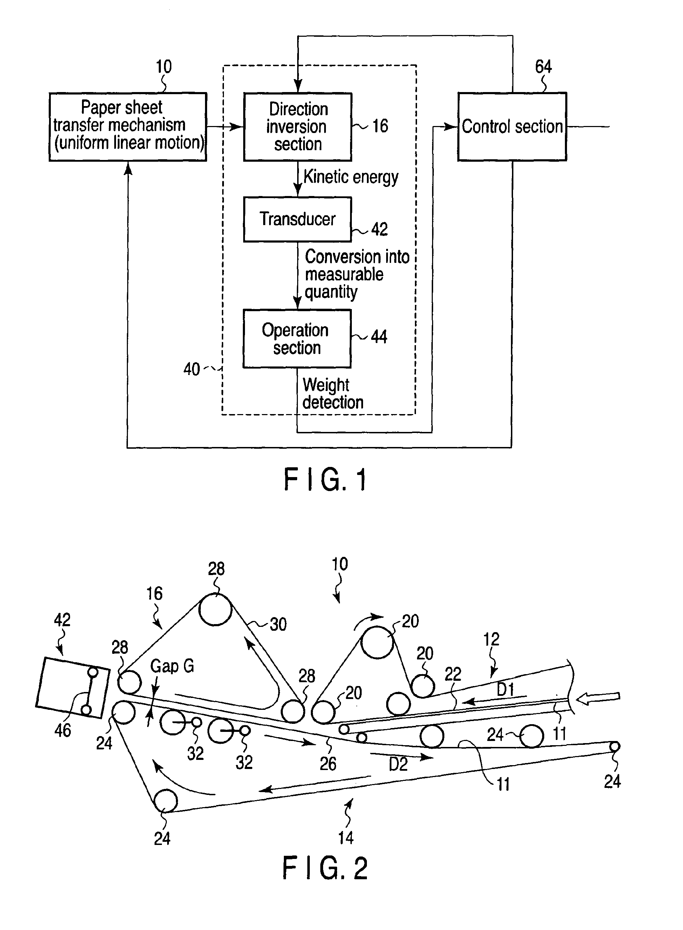

FIG. 1 is a block diagram schematically showing the overall configuration of a weight detection apparatus according to a first embodiment, and FIG. 2 is a plan view showing a transfer mechanism of the weight detection apparatus, direction inversion section, and transducer.

As shown in FIGS. 1 and 2, the weight detection apparatus comprises a transfer mechanism 10 configured to transfer a paper sheet P, such as mail as a medium to be detected, along a transfer path at a predetermined constant speed in a substantially linear manner, a detection section 40 configured to detect the weight of the paper sheet P, and a control section 64 configured to control operations of the transfer mechanism 10 and detection section 40. The detection section 40 includes a direction inversion section 16 provided at a way of the transfer path 11, and a transducer 42. The detection section 40 includes a calculating section 44 configured to calculate the weight of the paper sheet P from an output of the transducer 42, and a detection result of the detection section 40 is sent to the control section 64 to be used as sorting control information of the paper sheet P.

As shown in FIG. 2, the transfer mechanism 10 comprises a first transfer section 12 configured to transfer the paper sheet P in a first direction D1 in the upright position, a second transfer section 14 configured to transfer the paper sheet P in a second direction D2 different from the first direction, i.e., in this case, in the second direction D2 substantially opposite to the first direction D1 in the upright position, and the direction inversion section 16 configured to invert the direction of the paper sheet P transferred in the first direction D1, and send the paper sheet P in the second direction.

The first transfer section 12 includes a plurality of transfer rollers 20, transfer belts 22 wound around these transfer rollers, transfer guides, and the like. The first transfer section 12 is controlled by the control section 64 to transfer the paper sheets P one by one at a predetermined constant speed. The second transfer section 14 includes a plurality of transfer rollers 24, transfer belts 26 wound around these transfer rollers, transfer guides, and the like, and part thereof is positioned to be opposed to the first transfer section 12.

The direction inversion section 16 is arranged between the first transfer section 12 and the second transfer section 14. The direction inversion section 16 includes a plurality of transfer rollers 28, a transfer belt 30 wound around these transfer rollers, transfer guides (not shown), and the like. Part of the transfer belt 30 is opposed to a downstream side end part of the transfer belt 26 of the second transfer section 14 in parallel and over a predetermined length with a predetermined gap G held between them. The direction inversion section 16 includes a plurality of, for example, two gate rollers 32 arranged inside one of the transfer belts 30 and 26 in an area in which the transfer belt 30 and transfer belt 26 are opposed to each other. These gate rollers 32 are rotatable between an opened position shown in FIG. 2 and a depressed position to be described later, are configured to maintain, at the opened position, a gap G between the transfer belts 26 and 30, and when rotated to the depressed position, press the one transfer belt, in this case, the transfer belt 26 toward the other transfer belt 30 side to thereby eliminate the gap G. In this way, the gate rollers 32 move to the depressed position, whereby it becomes possible to transmit the drive force of the transfer belts 26 and 30 to the paper sheet P.

The transfer mechanism 10 includes a drive mechanism (not shown) configured to drive the transfer rollers 20, 24, and 28, and gate rollers 32, and an operation of the drive mechanism is controlled by the control section 64.

Then, the detection section 40 will be described.

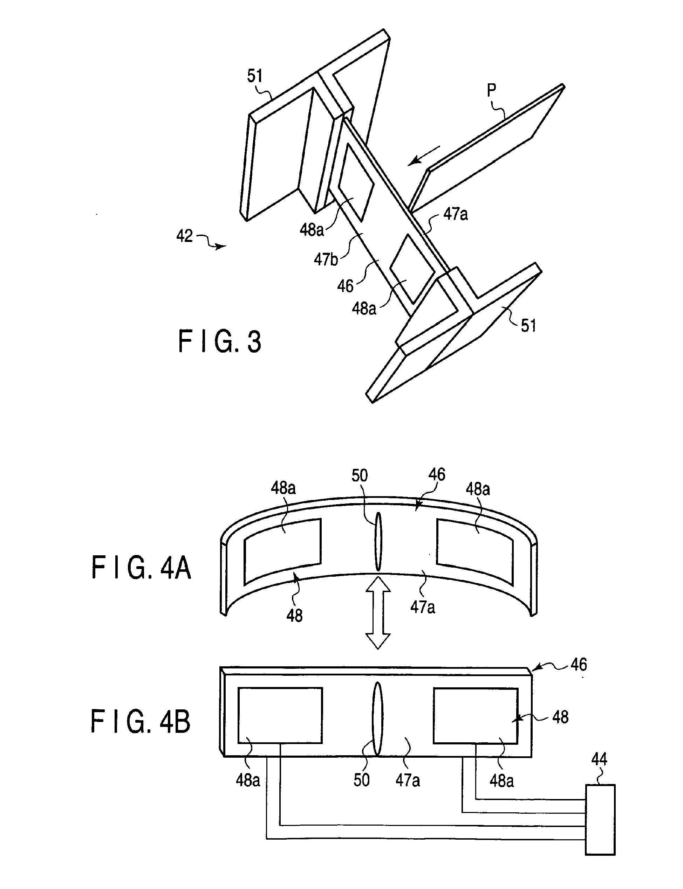

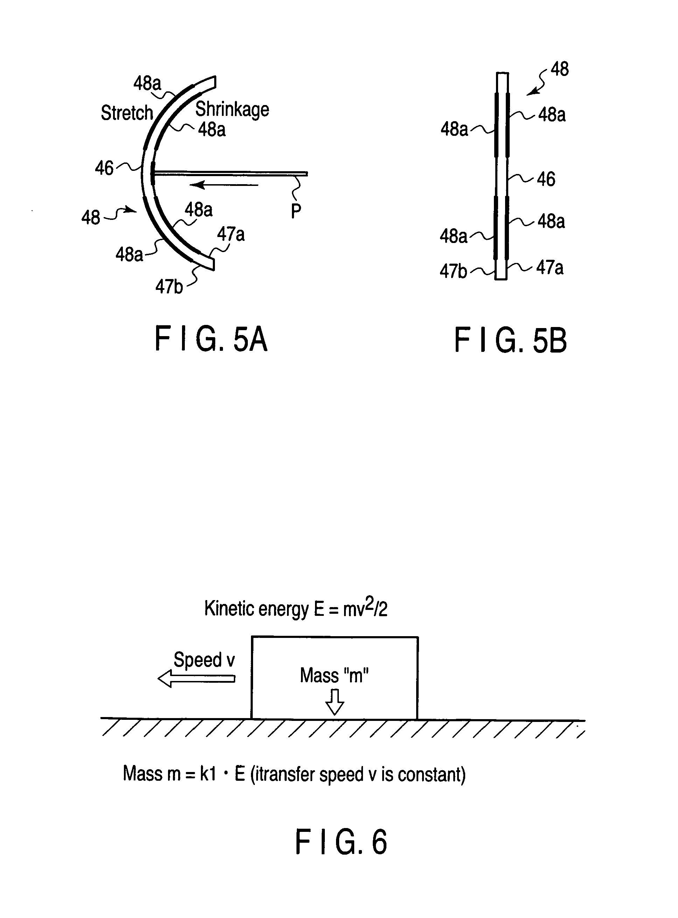

FIG. 3 is a perspective view showing a transducer 42 of the detection section 40, FIGS. 4A and 4B are perspective views respectively showing a deformed state and a natural state of a cushioning member of the transducer 42, and FIGS. 5A and 5B are plan views respectively showing the deformed state and natural state of the cushioning member.

As shown in FIGS. 2 and 3, the transducer 42 comprises a cushioning member 46 formed in such a manner that the member 46 can be deformed by the collision of the paper sheet P transferred at a constant speed with the member 46, and a sensor 48 configured to detect the deformation of the cushioning member 46 as a measurable physical quantity. As the cushioning member 46, a member with such durability as to enable the member to sufficiently receive the kinetic energy acquired by the weight of the paper sheet P transferred at a constant speed to be deformed, and immediately return to the original state is used. In this embodiment, the cushioning member 46 is constituted of a rectangular plate material, for example, a leaf spring.

The cushioning member 46 is provided at a downstream end of the direction inversion section 16 to intersect the transfer path 11, and is provided at a position at which the paper sheet P transferred in the first direction D1 is to effect collision with the member 46. The cushioning member 46 includes a collision surface 47a with which the paper sheet P is to collide, and a rear surface 47b positioned on the opposite side. Both end portions of the cushioning member 46 in the longitudinal direction are held and supported by support blocks 51 which are not deformable. Further, as shown in FIGS. 3, 4B, and 5B, the cushioning member 46 is held substantially flat in the natural state where the paper sheet P does not come into collision therewith, and is arranged in such a manner that a distal end of the paper sheet P collides with the cushioning member 46 substantially at right angles to the central portion 50 of the collision surface 47a in the longitudinal direction.

The sensor 48 includes a strain gage 48a fixed to the cushioning member 46, and configured to output deformation and strain of the cushioning member as a voltage signal. In this embodiment, two strain gages 48a are stuck on each of the collision surface 47a and the rear surface 47b of the cushioning member 46. The strain gages 48a are stuck at positions shifted from the central portion 50 of the cushioning member 46 toward both sides, and are provided at positions on the collision surface 47a side and positions on the rear surface 47b side opposed to each other.

As shown in FIGS. 4A and 5A, when the paper sheet P transferred at a predetermined speed collides with the central portion 50 of the cushioning member 46, the cushioning member 46 receives the paper sheet P with kinetic energy corresponding to the weight thereof to be deformed or strained into a substantially arcuate shape. An amount of deformation or strain of the cushioning member 46 is determined by the kinetic energy of the paper sheet P, particularly by the weight, and the strain gages 48a are also strained concomitantly with the deformation or strain of the cushioning member 46. The strain gages 48a stuck on the collision surface 47a side of the cushioning member 46 are strained in the shrinkage direction, and the strain gages 48a stuck on the rear surface 47b side are strained in the stretch direction. Each of these strain gages 48a converts the strain into a voltage signal, and outputs the signal. The detection accuracy of the strain is enhanced by providing the plurality of strain gages 48a on the front and rear surfaces of the cushioning member 46.

As described above, the cushioning member 46 absorbs (buffers) the kinetic energy by receiving the paper sheet P with the kinetic energy and being deformed or strained, and repels the paper sheet P in the second direction by thereafter returning to the original state immediately. A voltage signal produced by each of the strain gages 48a is sent to the operation section 44 as a measurable physical quantity, a correlation is acquired by the operation section, and the weight m of the paper sheet P is calculated. Further, the calculated weight of the paper sheet P is fed back to the control section 64.

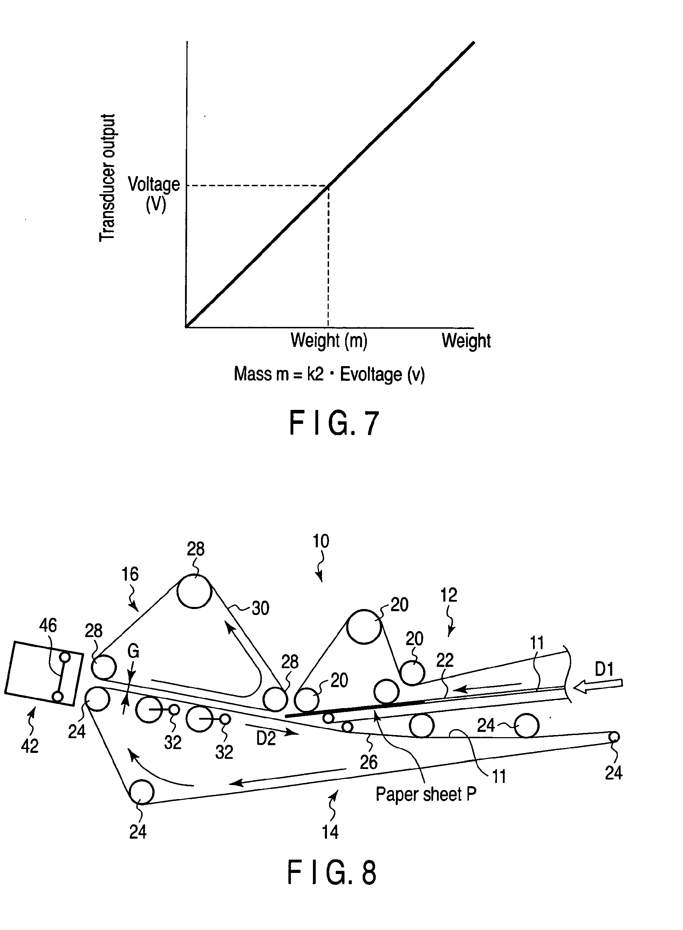

FIGS. 6 and 7 show the above-mentioned principle of weight detection.

In general, when a substance with mass m is moved at a transfer speed v, the kinetic energy E of the substance can be expressed by E=mv²/2.

From this equation, when the transfer speed v is constant, the mass m is expressed by m=k1•E (k1 is a coefficient), and hence a coefficient K1 of the transducer can be obtained by the mass of the substance and transfer speed v thereof which are experimentally obtained in advance. Accordingly, if the kinetic energy E can be converted into any measurable physical quantity by a transducer, the mass m of the substance can be obtained from the physical quantity and coefficient.

Although the kinetic energy possessed by the moving substance, i.e., the medium to be detected is converted by the transducer at a certain degree of efficiency, energy loss is also included in the conversion, and hence it is possible to enhance the detection accuracy by taking the correlation. FIG. 7 shows the correlation (k2 is a coefficient) between the weight of the medium to be detected and transducer output of a case, for example, where the energy is converted into a voltage by a strain gage. From the above, by obtaining the coefficient K2 indicative of the correlation in advance, it is possible to calculate the weight m of the substance from the voltage signal converted by the transducer 42 and coefficient K2.

A transfer operation and weight detection operation of the weight detection apparatus configured as described above will be described. As shown in FIGS. 2 and 8, paper sheets P are transferred by the first transfer section 12 at a constant transfer speed v and with predetermined pitches along the transfer path 11 in the first direction D1, and enter the direction inversion section 16. At this time, the gate rollers 32 are each held at the opened position, and the transfer belt 26 of the second transfer section 14, and the transfer belt 30 of the direction inversion section 16 are opposed to each other with the gap G between them. Accordingly, the transfer path 11 before collision with the transducer 42 has a gap of a size capable of guiding the paper sheet P to such a degree that the paper sheet can pass through the gap G with sufficient freedom, and does not fall down.

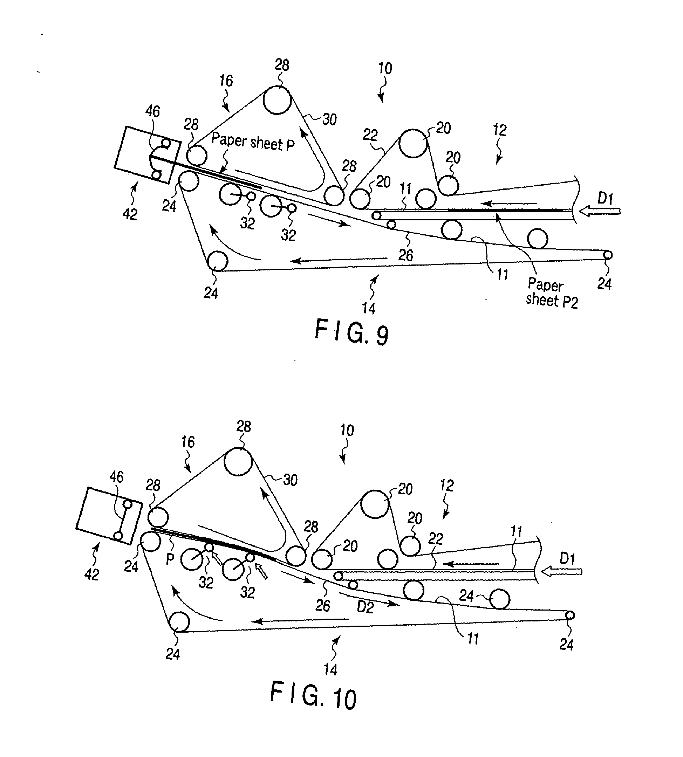

As shown in FIG. 9, the paper sheet P that has been transferred by the first transfer section 12, passes through the gap G to rush into the transducer 42, and naturally collides against the cushioning member 46 of the transducer 42. As a result of this, the cushioning member 46 is deformed or strained in accordance with the kinetic energy of the paper sheet P, and the strain gages 48a are also strained concomitantly with the deformation or strain of the cushioning member 46. Each of the strain gages 48a converts the strain thereof into a voltage signal, and outputs the signal to the operation section 44. The operation section 44 calculates the weight m of the paper sheet P from the voltage signals converted by the transducer 42, and coefficient K2 obtained in advance, and feeds back the calculation result to the control section 64.

The cushioning member 46 absorbs (buffers) the kinetic energy by receiving the paper sheet P with the kinetic energy and being deformed or strained, and repels the paper sheet P in the transfer direction D2 opposite to the first direction D1 in which the paper sheet has entered the transducer 42 by thereafter returning to the original state immediately.

At this time, as shown in FIG. 10, under the control of the control section 64, each of the two gate rollers 32 is moved to the depressed position, and presses the transfer belt 26 against the transfer belt 30 of the direction inversion section 16. As a result of this, the paper sheet P repelled and inverted in direction by the transducer 42 is tightly caught between the transfer belts 26 and 30, and is then transferred by these transfer belts in the second direction D2 opposite to the direction in which the paper sheet P has been transferred in the outward travel. The operation timing of the gate rollers 32 is controlled by the control section 64 in such a manner that the gate rollers 32 are operated immediately after the conversion of the kinetic energy carried out by the transducer 42.

Thereafter, the paper leaves transferred in sequence by the first transfer section 12 with predetermined pitches, and at a constant speed are each received by the transducer 42 by the same operation as that described above, and after the weight detection, the paper leaves P are each inverted in direction in sequence with the cooperation of the direction inversion section 16, and are each sent off in sequence to the second transfer section 14.

According to the weight detection apparatus configured as described above, the kinetic energy of the medium to be transferred is converted by the transducer into a measurable physical quantity correlated with the weight, for example, a voltage value, the physical quantity is subjected to A/D conversion and operation, whereby it is possible to detect the weight of the medium to be transferred. In the configuration in which the kinetic energy is converted to detect the weight, even when the transfer pitch of the media to be detected is changed, if the gate operation of the direction inversion section is controllable, measurement of the weight is enabled. From the above description, it is possible to obtain a weight detection apparatus capable of stably detecting the weight of a moving substance being transferred as it is, and stably detecting the weight of a light medium to be detected. Furthermore, even when the media to be detected are transferred in a multiplexing manner, multiplex detection is also enabled.

Regarding the weight detection apparatus, another embodiment of a transducer configured to convert the kinetic energy of a medium to be detected into a measurable physical quantity will be described.

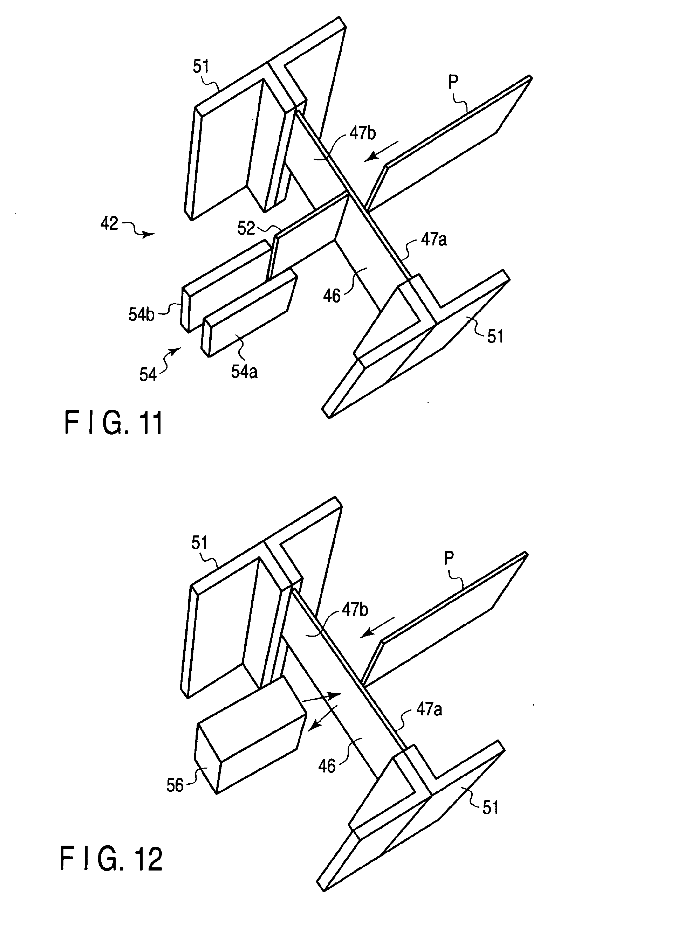

FIG. 11 shows a transducer of a weight detection apparatus according to a second embodiment. This transducer 42 is constituted by being provided with a transmission optical sensor. That is, the transducer 42 comprises, for example, a plate-shaped cushioning member 46 constituted of a leaf spring, a segment 52 extending from a rear surface 47b of the cushioning member substantially at right angles to the rear surface 47b, and an optical sensor 54 configured to detect the position of the segment. The cushioning member 46 is provided on a way of the transfer path of the transfer mechanism, and comprises a collision surface 47a with which a paper sheet P that is a medium to be detected can collide.

The segment 52 is formed of an opaque material. The optical sensor 54 includes a substantially rectangular light emission section 54a configured to emit detection light, and a substantially rectangular light reception section 54b opposed to the light emission section with a gap held between them. The segment 52 is arranged in such a manner that the segment 52 can enter the part between the light emission 54a of the optical sensor 54 and the light reception section 54b in accordance with the deformation of the cushioning member 46. That is, when the cushioning member 46 is deformed by the collision of the paper sheet P with the cushioning member 46, the segment 52 is moved in accordance with the collision, and enters the part between the light emission section 54a of the optical sensor 54, and the light reception section 54b. The detection light from the light emission section 54a is blocked by the segment 52, and the state is detected by the light reception section 54b, whereby the movement amount of the segment 52, i.e., the deformation amount of the cushioning member 46 is detected. Further, the weight of the paper sheet P is calculated from the detected movement amount of the segment 52, and preset coefficient.

FIG. 12 shows a transducer of a weight detection apparatus according to a third embodiment. The transducer 42 is configured as a system in which a position of a cushioning member is directly measured by a reflection optical sensor. That is, the transducer 42 is provided with, for example, a plate-shaped cushioning member 46 constituted of a leaf spring, and reflection optical sensor 56. The cushioning member 46 includes a collision surface 47a which can be brought into contact with a paper sheet P, and rear surface 47b positioned on the opposite side. The cushioning member 46 is provided at a midway position of a transfer path of a transfer mechanism, and is provided so that a paper sheet P can collide with a central part of the collision surface 47a. The optical sensor 56 is arranged to be opposed to a central part of the rear surface 47b of the cushioning member 46 with a predetermined interval held between them.

The optical sensor 56 irradiates the rear surface of the cushioning member 46 with detection light, and detects the reflected light from the rear surface. Further, the optical sensor 56 outputs a voltage signal or current signal corresponding to the distance between the sensor 56 and cushioning member 46, i.e., displacement amount of the cushioning member 46 on the basis of the received reflected light. Further, the weight of the paper sheet P is calculated from the detected displacement amount of the cushioning member 46, and a preset coefficient.

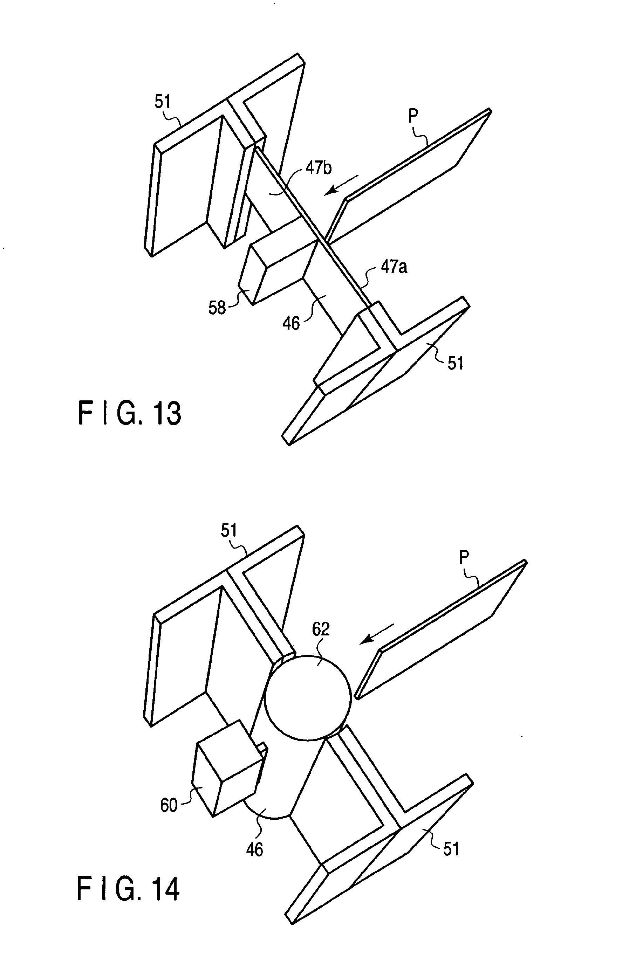

FIG. 13 shows a transducer of a weight detection apparatus according to a fourth embodiment. The transducer 42 is configured to directly detect the intensity of the impact as acceleration by means of an acceleration sensor attached to the cushioning member 46 configured to receive the kinetic energy of the medium to be detected. That is, the transducer 42 is provided with, for example, a plate-shaped cushioning member 46 constituted of a leaf spring, and acceleration sensor 58. The cushioning member 46 includes a collision surface 47a which can be brought into contact with a paper sheet, and a rear surface 47b positioned on the opposite side. The cushioning member 46 is provided at a midway position of a transfer path of a transfer mechanism, and is provided so that a paper sheet P can collide with the central part of the collision surface 47a. The acceleration sensor 58 is fixed to the central part of the rear surface 47b of the cushioning member 46, and is positioned immediately on the back side of the central part of the collision surface 47a with which the paper sheet P collides.

When the paper sheet P collides with the cushioning member 46 and the cushioning member 46 is deformed in accordance with the kinetic energy of the paper sheet P, the acceleration sensor 58 is displaced together with the cushioning member 46 as one body, and directly detects the intensity of the impact as acceleration. The weight of the paper sheet P is calculated from the detection value of the acceleration sensor 58, and preset coefficient.

FIG. 14 shows a transducer of a weight detection apparatus according to a fifth embodiment. The transducer 42 carries out weight detection by a pressure sensor. The transducer 42 is provided with a cushioning member 46, and a pressure sensor 60 provided in contact with the cushioning member. The cushioning member 46 is constituted of a cylindrical air bag 62 into which a gaseous body is filled. The air bag 62 is arranged in such a manner that a central axis thereof intersects the transfer path 11 of the paper sheet P, and is arranged in such a manner that the paper sheet P collides with the outer circumferential surface thereof. The pressure sensor 60 is provided at a position on the air bag 62 on the opposite side, in the radial direction, of the position at which the paper sheet P collides with the air bag 62, in airtight contact with the outer circumferential surface of the air bag.

When the transferred paper sheet P collides with the transducer, the air bag 62 receives the kinetic energy of the paper sheet P to be deformed for cushioning, and the pressure of the gaseous body inside the air bag varies. The pressure sensor 60 detects the pressure variation of the gaseous body inside the air bag 62, and outputs the detected value as a current signal or voltage signal. The weight of the paper sheet P is calculated from the output value of the pressure sensor 60, and preset coefficient.

It should be noted that a plurality of pressure sensors may be connected to the circumferential part of the air bag 62 in an airtight state, and output values of the plurality of sensors may be averaged by an operation section to raise the degree of detection accuracy.

In each of the second to fifth embodiments described above, the other configurations of the transducer 42 and the weight detection apparatus are identical with the first embodiment described previously, and parts identical with the first embodiment are denoted by reference symbols identical with the first embodiment, and a detailed description of them is omitted. Further, when the transducer according to each of the second to fifth embodiments is used, it is possible to obtain a function or advantage identical with the first embodiment.

The present invention is not limited directly to the embodiment described above, and its components may be embodied in modified forms without departing from the scope or spirit of the invention. Further, various inventions may be made by suitably combining a plurality of components described in connection with the foregoing embodiment. For example, some of the components according to the foregoing embodiment may be omitted. Furthermore, components according to different embodiments may be combined as required.

The medium to be detected is not limited to the paper sheet, and may be the other medium if it is a medium that can be transferred at a constant speed.

The paper sheet is not limited to the above-mentioned mail, and is applicable to various paper leaves. Further, in the weight detection apparatus, the medium to be detected is not limited to the case where after the medium collides with the transducer, the transfer direction of the medium is inverted, and the medium may be configured to fall.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A weight detection apparatus **characterized by** comprising:
a transfer mechanism (10) configured to transfer a medium (P) to be detected along a transfer path (11) at a predetermined speed;
a transducer (42) configured to detect a kinetic energy of the medium (P) transferred by the transfer mechanism, and convert the detected kinetic energy into a measurable physical quantity; and
an operation section (44) configured to calculate an weight of the medium on the basis of the physical quantity converted by the transducer and the predetermined speed.

2. The weight detection apparatus according to claim 1, **characterized in that** the transducer (42) comprises a cushioning member (46) which is arranged on the transfer path (11) so that the medium (P) is able to collide with the member, and configured to deform by the collision of the medium with the member, and a sensor (48) configured to detect a deformation of the cushioning member as a physical quantity.

3. The weight detection apparatus according to claim 2, **characterized in that** the transfer mechanism (10) comprises a first transfer section (12) configured to transfer the medium (P) in a first direction, a second transfer section (14) configured to transfer the medium in a second direction different from the first direction, and a direction inversion section (16) arranged between the first transfer section and the second transfer section, and configured to invert the direction of the medium transferred in the first direction, and send the medium in the second direction, and
the cushioning member (46) of the transducer (42) is arranged on a downstream side of the direction inversion section (16) and at a position at which the medium (P) transferred in the first direction collides with the transducer.

4. The weight detection apparatus according to claim 2 or 3, **characterized in that** the cushioning member (46) of the transducer (42) is a plate member provided to intersect the transfer path (11), and the sensor (48) comprises a strain gage (48a) fixed to the plate member and configured to output deformation of the plate member as a voltage signal.

5. The weight detection apparatus according to claim 4, **characterized in that** the sensor (48) comprises a plurality of strain gages (48a) stuck on both sides of the plate member.

6. The weight detection apparatus according to claim 2 or 3, **characterized in that** the cushioning member (46) of the transducer (42) comprises a plate member including a collision surface (47a) configured to collide with the medium (P), and a rear surface (47b) positioned on the opposite side of the collision surface, and a segment (52) protruding from the rear surface of the plate member, and
the sensor comprises an optical sensor (54) configured to detect a movement amount of the segment (52).

7. The weight detection apparatus according to claim 2 or 3, **characterized in that** the cushioning member (46) of the transducer (42) comprises a plate member including a collision surface (47a) configured to collide with the medium (P), and a rear surface (47b) positioned on the opposite side of the collision surface, and
the sensor comprises a reflection displacement sensor (56) configured to detect a displacement of the plate member by a reflected light from the rear surface of the plate member.

8. The weight detection apparatus according to claim 2 or 3, **characterized in that** the cushioning member (46) of the transducer (42) is a plate member arranged to intersect the transfer path (11), and
the sensor comprises an acceleration sensor (58) fixed to the plate member and configured to output deformation of the plate member as a voltage signal.

9. The weight detection apparatus according to claim 2 or 3, **characterized in that** the cushioning member (46) of the transducer (42) comprises an air bag (62) provided on the transfer path (11) and configured to collide with the medium, and
the sensor comprises a pressure sensor (60) connected to the air bag in an airtight state and configured to detect a pressure variation inside the air bag.
